# EUROPÄISCHE PATENTSCHRIFT

(11) **EP 2 887 041 B1**
(45) Veröffentlichungstag und Bekanntmachung des Hinweises auf die Patenterteilung: **29.03.2017**
(21) Anmeldenummer: 14175326.9
(22) Anmeldetag: 01.07.2014
(51) Int. Cl.: G01L 9/00, G01L 19/06

(54) **Druckmesszelle mit einer Antihaftbeschichtung**
Measuring cell
Cellule de mesure

(30) Priorität: 19.12.2013 DE 102013226775
(43) Veröffentlichungstag der Anmeldung: 24.06.2015
(73) Patentinhaber: VEGA Grieshaber KG, 77709 Wolfach (DE)
(72) Erfinder: JACOB, Jörn, 77709 Wolfach (DE)
(74) Vertreter: Westphal, Mussgnug & Partner Patentanwälte mbB

(56) Entgegenhaltungen:
- DE-A1- 3 912 217
- DE-A1-102006 056 172
- DE-A1-102011 084 612
- US-A- 5 889 211
- US-A1- 2008 110 269

## Beschreibung

Die vorliegende Erfindung betrifft eine Messzelle gemäß dem Oberbegriff des Patentanspruchs 1.

Aus dem Stand der Technik sind verschiedentlich Messzellen mit einem Messzellenkörper und einer an dem Messzellenkörper angeordneten Messmembran bekannt, wobei die Messmembran bei bestimmungsgemäßen Einsatz der Messzelle wenigstens in einem Messabschnitt einer Messumgebung zugewandten Oberfläche der Messmembran in unmittelbarem Kontakt mit der Messumgebung steht.

Häufig werden hierfür kapazitiv arbeitende Druckmesszellen verwendet, bei denen auf einer Innenseite der Messmembran einerseits und einem Grundkörper andererseits gegenüberliegend Elektroden angeordnet sind, die eine Messkapazität bilden. Durch auf die Messmembran einwirkende Kräfte ändert sich der Abstand dieser Elektroden, wodurch eine Druckänderung detektiert werden kann.

Solche Messzellen werden beispielsweise bei Druckmessgeräten im Stand der Technik eingesetzt. Hierbei ist bei einigen Anwendungen zu beobachten, dass sich mit der Zeit Ablagerungen auf der Messmembran bilden. Diese können oft kalkartige Anhaftungen oder Schlämme sein, welche im Laufe des Betriebs des Druckmessgerätes eine harte Kruste ausbilden können. Diese harte Kruste wiederum kann zu erheblichen Messfehlern führen, da sie die Steifigkeit der Messmembran beeinflusst bzw. durch eine entstehende Schichtspannung die Messmembran verbiegt. Sowohl metallische Oberflächen wie z.B. Edelstähle als auch keramische Oberflächen wie beispielsweise Aluminiumoxid, die in der Druckmesstechnik häufig eingesetzt werden, neigen aufgrund ihrer Oberflächeneigenschaften zu solchen stark anhaftenden Ablagerungen. Um eine gleichbleibende Messqualität zu gewährleisten ist es daher notwendig, dass der Anwender solcher Druckmessgeräte häufig Wartungen durchführt um die Anhaftungen zu entfernen. Neben dem Nachteil, dass häufige Wartungen notwendig sind besteht außerdem die Gefahr, dass beim Ablösen der Anhaftungen eine Beschädigung der Messmembran auftritt.

Bekannt sind aus der DE 39 12 217 A1 Drucksensoren mit einem Grundkörper und einer Membran, die an dem Grundkörper mittels einer umlaufenden Fügung befestigt ist und deren eine Fläche einem Medium ausgesetzt ist, wobei diese Fläche gegen Korrosion oder Abrasion mit Siliziumkarbid beschichtet ist.

Ebenfalls offenbart DE 10 2006 056 172 A1 einen Drucksensor mit einem scheibenförmigen Basiskörper und einem Membranträgerkörper, wobei die dem Medium ausgesetzte Oberfläche des Basiskörpers gegen Korrosion mit einer Deckschicht aus Al2O3 beschichtet ist.

US 5,889,211 offenbart einen Mikrosensor mit einer Membran und einem Körper, wobei die Membran mit einer anorganischen Schutzschicht beschichtet ist.

US 2008/0110269 offenbart eine Messzelle mit einer Membran zwischen zwei Blechgehäuse, wobei die Messzelle mit einer Schutzschicht beschichtet ist.

DE 10 2011 084 612 A1 offenbart eine keramische Druckmesszelle mit einer Membran und einem Messzellenkörper, die an einer umlaufenden Fügestelle verbunden sind. Außerdem weist die Druckmesszelle eine elektrisch leitfähige Beschichtung auf, die die Mantelfläche der Druckmesszelle sowie die Fügung überdeckt.

Hier setzt die vorliegende Erfindung an.

Es ist die Aufgabe der Erfindung, eine Druckmesszelle bereitzustellen, bei der solche Anhaftungen vermieden, stark reduziert oder zumindest das Entfernen von noch verbleibenden Anhaftungen deutlich erleichtert wird.

Diese Aufgabe wird durch eine Messzelle mit den Merkmalen des Patentanspruchs 1 gelöst.

Vorteilhafte Weiterbildungen sind Gegenstand von abhängigen Ansprüchen.

Eine erfindungsgemäße Messzelle mit einem Messzellenkörper und einer an dem Messzellenkörper angeordneten Messmembran, bei der die Messmembran bei bestimmungsgemäßem Einsatz der Messzelle wenigstens in einem Messabschnitt einer Messumgebung zugewandten Oberfläche der Membran unmittelbar im Kontakt mit der Messumgebung steht, wobei wenigstens in dem Messabschnitt eine Antihaftbeschichtung angeordnet ist, wobei die Antihaftbeschichtung zusätzlich auf einer an die der Messumgebung zugewandten Oberfläche angrenzenden Seitenfläche der Membran angeordnet ist, wobei die Membran an dem Grundkörper mittels einer umlaufenden Fügung befestigt ist, wobei die Antihaftbeschichtung aus Siliziumcarbid ausgebildet ist und eine Schichtdicke zwischen 1 µm und 40 µm aufweist, zeichnet sich dadurch aus, dass die Antihaftbeschichtung die Fügung überdeckt. Durch eine geeignete Antihaftbeschichtung kann einerseits eine Anlagerung von kalkhaltigen Anhaftungen oder Schlämmen sowie die Bildung von Verkrustungen im Messbereich, in dem die Membran mit der Messumgebung in Kontakt steht, vermieden werden, andererseits wird ein Ablösen solcher Verkrustungen, wenn diese dennoch entstehen, deutlich vereinfacht. Durch eine Anordnung der Antihaftbeschichtung sowohl auf der Oberfläche der Messmembran als auch auf deren Seitenfläche sowie der Fügung wird einerseits erreicht, dass die erfindungsgemäße Messzelle zu einem größeren Teil mit der Messumgebung in Kontakt stehen kann und andererseits wird ein wirksamer Korrosionsschutz für die umlaufende Fügung erreicht.

Siliziumcarbid weist einen Kontaktwinkel zu Wasser von ca. 95° auf, was einer Oberflächenspannung von etwa 25 mN/m entspricht. Siliziumcarbid weist darüber hinaus eine Vickershärte von über 2.300 auf. Im Vergleich dazu liegt die Vickershärte von Aluminiumoxid bei 1.900, die diesbezüglichen Eigenschaften von Aluminiumoxid werden durch die Antihaftbeschichtung damit sogar verbessert.

Bevorzugt wird eine Antihaftbeschichtung, welche die guten Eigenschaften des Grundmaterials der Messzelle bzw. der Messmembran mit einer Antihaftwirkung aufwertet, ohne andere Eigenschaften beispielsweise die Abrasionsbeständigkeit, die Korrosionsbeständigkeit oder das Messsignal zu verschlechtern.

Fertigungstechnisch ist es besonders einfach, wenn die Antihaftbeschichtung vollflächig auf der der Messumgebung zugewandten Oberfläche der Membran angeordnet ist. Ein vollflächiges Aufbringen der Antihaftbeschichtung ist dabei besonders einfach, da so auf eine Strukturierung der Antihaftbeschichtung verzichtet werden kann. Diese kann damit beispielsweise durch verschiedene Abscheidverfahren beispielsweise Gasphasenabscheidung, durch aufdampfen, aufsputtern oder andere geeignete Verfahren problemlos auf die Außenseite der Messmembran aufgebracht werden.

Die Seitenfläche des Grundkörpers kann dabei bevorzugt zu 1/10 weiter bevorzugt zu 1/3 und noch weiter bevorzugt zu 1/2 von der Antihaftbeschichtung bedeckt sein. Durch eine Anordnung der Antihaftbeschichtung auf dem Grundkörper der Messzelle wird erreicht, dass die erfindungsgemäße Messzelle zu einem größeren Teil mit der Messumgebung in Kontakt stehen kann.

Eine bevorzugte Antihaftbeschichtung weist dabei einen Kontaktwinkel zu Wasser von bevorzugt Größer als 90° auf , sowie eine Oberflächenspannung von bevorzugt kleiner 30mN/m.

Eine besonders gute Einbindung des Aufbringens der Antihaftbeschichtung in einen Herstellungsprozess einer Messzelle kann erreicht werden, wenn die Antihaftbeschichtung eine Beschichtungstemperatur von weniger als 200°C, bevorzugt weniger als 150°C aufweist. Eine Beschichtungstemperatur von weniger als 200°C bzw. als 150°C ermöglicht es, dass die Antihaftbeschichtung auf die Messzelle aufgebracht wird, wenn die Messmembran bereits mit dem Grundkörper der Messzelle verbunden ist. Es wird dabei insbesondere auf die umlaufende Fügung, die beispielsweise mittels eines Glaslots oder eines Hartlots hergestellt sein kann Rücksicht genommen.

Eine hohe Abrasionsfestigkeit der Antihaftbeschichtung kann erreicht werden, wenn diese polymerfrei ausgebildet ist.

Eine bevorzugte Antihaftbeschichtung weist dabei eine Schichtdicke von 10 µm.

Typische Messzellen, bei denen eine derartige Antihaftbeschichtung zum Einsatz kommen kann, weisen einen Grundkörper und/oder eine Messmembran aus Keramik auf, wobei die Fügung zwischen der Messmembran und dem Grundkörper bevorzugt mittels eines Glaslots oder eines Hartlots hergestellt ist.

Die vorliegende Erfindung wird nachfolgend unter Bezugnahme auf die beigefügten Figuren eingehend erläutert. Es zeigen:
- Figur 1: eine perspektivische Darstellung eines Ausführungsbeispiels einer Messzelle mit Antihaftbeschichtung und
- Figur 2: einen Schnitt durch die Messzelle aus Figur 1.

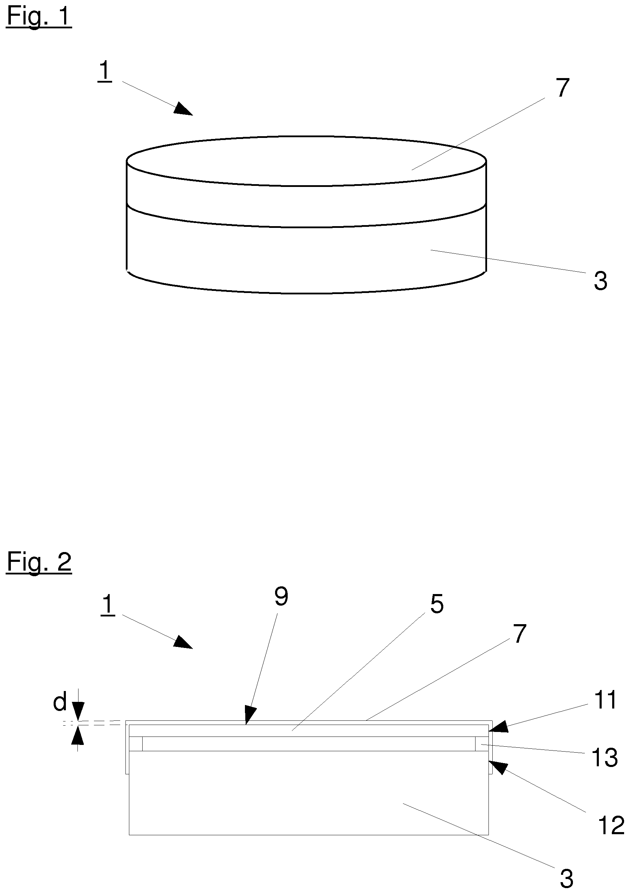

Figur 1 zeigt eine perspektivische Darstellung einer Messzelle 1, die vorliegend als keramische Druckmesszelle ausgebildet ist. Die Messzelle 1 weist einen Messzellenkörper 3 auf, an dem vorderseitig eine Messmembran 5 mittels einer umlaufenden Fügung 13 aus einem Glaslot befestigt ist. An den zueinander zugewandten Oberflächen von Messzellenkörper 3 und Messmembran 5 sind Metallisierungen aufgebracht, die einen Messkondensator bilden, mittels dessen eine Abstandsänderung zwischen Messmembran 5 und Grundkörper 3 und damit eine Druckänderung detektierbar ist.

Die Messzelle 1 weist ferner eine Antihaftbeschichtung 7 auf, die die Messmembran 5, die umlaufende Fügung 13 sowie einen Teilabschnitt einer Seitenfläche 12 des Messzellenkörpers 3 bedeckt.

Die Anordnung der Antihaftbeschichtung 7 auf der Messzelle 1 ist in Figur 2 darstellt.

Figur 2 zeigt eine Schnittdarstellung der in Figur 1 dargestellten Messzelle 1, wobei die Größenverhältnisse zur Vereinfachung der Darstellung nicht maßstabsgetreu nachgebildet sind.

In Figur 2 ist besonders deutlich zu erkennen, dass die Antihaftbeschichtung 7 vollflächig auf eine Oberfläche 9 der Messmembran 5 auf einer Seitenfläche der Messmembran 11 sowie auf der umlaufenden Fügung 13 und einer Seitenfläche des Grundkörpers 12, der sich an die Fügung 13 anschließt aufgebracht ist. So wird auf diese Weise erreicht, dass die Antihaftbeschichtung 7 die umlaufend angeordnete Fügung 13 aus einem Glaslot vollständig überdeckt und damit gegenüber Einflüsse von der Messumgebung her effektiv schützt.

Die Antihaftbeschichtung 7 weist im vorliegenden Ausführungsbeispiel eine Schichtdicke d von 10 µm auf. Diese Schichtdicke d gewährleistet, dass insbesondere im Bereich der Messmembran 5 die positiven Eigenschaften der zugrunde liegenden Messzelle 1 erhalten bleiben und durch die Antihaftbeschichtung 7 sogar verbessert werden.

Im vorliegenden Ausführungsbeispiel ist die Antihaftbeschichtung 7 auf eine keramische Messzelle 1 aus Aluminiumoxid aufgebracht, und aus Siliziumcarbid gefertigt. Siliziumcarbid weist im Vergleich zu Aluminiumoxid verbesserte Eigenschaften hinsichtlich der Abrasionsfestigkeit auf und kann insbesondere mit einer guten Haftfestigkeit auf den verwendeten Materialien, im vorliegenden Fall Keramik und Glas, aufgebracht werden. Siliziumcarbid ist darüber hinaus für Lebensmittelanwendungen zugelassen und weist einen zur Messmembran 5 ähnlichen thermischen Ausdehnungskoeffizienten auf, so dass zwischen Antihaftbeschichtung und der Messmembran 5 keine Scherspannungen auftreten.

Durch die verbesserte Oberflächenstruktur des Siliziumcarbids, dass beispielsweise durch ein CVD-Verfahren aufgebracht werden kann, werden die häufig zu Problemen führenden kalkartigen Anhaftungen oder Anbackungen aus Schlämmen signifikant vermindert und eine Ablösung wird deutlich erleichtert.

Gegenüber dem Stand der Technik können so längere Wartungsintervalle vorgesehen werden, wobei darüber hinaus die Gefahr von Beschädigungen der Messmembran 5 bei einem Ablösen von Anhaftungen deutlich reduziert wird.

### Bezugszeichenliste

- 1: Messzelle
- 3: Messzellenkörper
- 5: Messmembran
- 7: Antihaftbeschichtung
- 9: Oberfläche
- 11: Seitenfläche der Membran
- 12: Seitenfläche des Grundkörpers
- 13: Fügung

- d: Schichtdicke

## Patentansprüche

1. Messzelle (1) mit einem Messzellenkörper (3) und einer an dem Messzellenkörper (3) angeordneten Messmembran (5), wobei die Messmembran (5), bei bestimmungsgemäßem Einsatz der Messzelle (1) wenigstens in einem Messabschnitt einer der Messumgebung zugewandten Oberfläche (9) der Membran (5) in unmittelbarem Kontakt mit einer Messumgebung steht, wobei wenigstens auf dem Messabschnitt eine Antihaftbeschichtung (7) angeordnet ist, wobei die Antihaftbeschichtung (7) zusätzlich auf einer an die der Messumgebung zugewandten Oberfläche (9) angrenzenden Seitenfläche der Membran (11) angeordnet ist, wobei die Membran (5) an dem Grundkörper mittels einer umlaufenden Fügung (13) befestigt ist, wobei die Antihaftbeschichtung (7) aus Siliziumcarbid ausgebildet ist und eine Schichtdicke (d) zwischen 1 µm und 40 µm aufweist,
**dadurch gekennzeichnet, dass**
die Antihaftbeschichtung (7) die Fügung (13) überdeckt.

2. Messzelle (1) gemäß Anspruch 1,
**dadurch gekennzeichnet, dass**
die Antihaftbeschichtung (7) vollflächig auf der der Messumgebung zugewandten Oberfläche (9) der Membran (5) angeordnet ist.

3. Messzelle (1) gemäß Anspruch 4,
**dadurch gekennzeichnet, dass**
die Antihaftbeschichtung (7) eine an die Fügung (13) grenzende Seitenfläche des Grundkörpers (12) wenigstens teilweise bedeckt, bevorzugt wenigstens zu 1/10, weiter bevorzugt zu 1/3, weiter bevorzugt zu 1/2.

4. Messzelle (1) gemäß einem der vorhergehenden Ansprüche,
**dadurch gekennzeichnet, dass**
die Antihaftbeschichtung (7) einen Kontaktwinkel zu Wasser größer als 90° aufweist.

5. Messzelle (1) gemäß einem der vorhergehenden Ansprüche,
**dadurch gekennzeichnet, dass**
die Antihaftbeschichtung (7) eine Beschichtungstemperatur von weniger als 200°C, bevorzugt weniger als 150°C aufweist.

6. Messzelle (1) gemäß einem der vorhergehenden Ansprüche,
**dadurch gekennzeichnet, dass**
die Antihaftbeschichtung (7) polymerfrei ausgebildet ist.

7. Messzelle (1) gemäß einem der vorhergehenden Ansprüche,
**dadurch gekennzeichnet, dass**
die Antihaftbeschichtung (7) eine Schichtdicke (d) von 10 µm aufweist.

8. Messzelle (1) gemäß einem der vorhergehenden Ansprüche,
**dadurch gekennzeichnet, dass**
der Messzellenkörper und/oder die Messmembran (5) aus Keramik ausgebildet sind.

9. Messzelle (1) gemäß einem der Ansprüche 3 bis 8,
**dadurch gekennzeichnet, dass**
die Fügung (13) mittels eines Glaslots oder eines Hartlots hergestellt ist.

## Claims

1. Measuring cell (1) having a measuring cell body (3) and a measuring membrane (5) arranged on the measuring cell body (3), wherein the measuring membrane (5), when the measuring cell (1) is used as intended, is in direct contact with a measuring vicinity at least in a measuring section of a surface (9) of the membrane (5) facing the measuring vicinity, wherein a non-stick coating (7) is arranged at least on the measuring section, wherein the non-stick coating (7) is additionally arranged on a lateral surface of the membrane (11) that is adjacent to the surface (9) facing the measuring vicinity, wherein the membrane (5) is fixed to the base body by means of a peripheral construction (13), wherein the non-stick coating (7) is formed from silicon carbide and has a thickness (d) of between 1 µm and 40 µm,
**characterised in that**
the non-stick coating (7) covers the construction (13).

2. Measuring cell (1) according to claim 1,
**characterised in that**
the non-stick coating (7) is arranged all over the surface (9) of the membrane (5) facing the measuring vicinity.

3. Measuring cell (1) according to claim 4,
**characterised in that**
the non-stick coating (7) at least partially covers a lateral surface of a base body (12) adjacent to the construction (13), preferably by at least 1/10, more preferably by 1/3, more preferably by 1/2.

4. Measuring cell (1) according to one of the preceding claims,
**characterised in that**
the non-stick coating (7) has a contact angle relative to water of greater than 90°.

5. Measuring cell (1) according to one of the preceding claims,
**characterised in that**
the non-stick coating (7) has a coating temperature of less than 200°C, preferably less than 150°C.

6. Measuring cell (1) according to one of the preceding claims,
**characterised in that**
the non-stick coating (7) is formed to be free of polymers.

7. Measuring cell (1) according to one of the preceding claims,
**characterised in that**
the non-stick coating (7) has a thickness (d) of 10 µm.

8. Measuring cell (1) according to one of the preceding claims,
**characterised in that**
the measuring cell body and/or the measuring membrane (5) are formed from ceramic.

9. Measuring cell (1) according to one of claims 3 to 8,
**characterised in that**
the construction (13) is produced by means of a glass solder or hard solder.

## Revendications

1. Cellule de mesure (1) comprenant un corps de cellule de mesure (3) et une membrane de mesure (5) située sur le corps de cellule de mesure (3), dans laquelle lors d'une utilisation conforme de la cellule de mesure (1), la membrane de mesure (5) est, au moins sur un segment de mesure de la surface (9) de la membrane (5) tournée vers le milieu à mesurer, en contact direct avec le milieu d'un revêtement antiadhésif (7), est appliqué au moins sur le segment de mesure ce revêtement antiadhésif (7) est en outre appliqué sur la surface latérale (11) de la membrane délimitant la surface (9) tournée vers le milieu à mesurer, la membrane (5) est fixée sur le corps de base au moyen d'un joint périphérique (13), et le revêtement antiadhésif (7) est réalisé en carbure de silicium et a une épaisseur (d) comprise entre 1 µm et 40µm,
**caractérisée en ce que**
le revêtement antiadhésif (7) recouvre le joint (13).

2. Cellule de mesure conforme à la revendication 1,
**caractérisée en ce que**
le revêtement antiadhésif (7) est appliqué sur la totalité de la surface (9) de la membrane (5) tournée vers le milieu à mesurer.

3. Cellule de mesure (1) conforme à la revendication 1,
**caractérisée en ce que**
le revêtement antiadhésif (7) recouvre au moins partiellement la surface latérale du corps de base (12) délimitant le joint (13), de préférence au moins au 1/10, de façon plus préférentielle au 1/3, et de façon encore plus préférentielle au 1/2.

4. Cellule de mesure (1) conforme à l'une des revendications précédentes,
**caractérisée en ce que**
le revêtement antiadhésif (7) a un angle de contact avec l'eau supérieur à 90°.

5. Cellule de mesure (1) conforme à l'une des revendications précédentes,
**caractérisée en ce que**
le revêtement antiadhésif (7) a une température de revêtement inférieure à 200°C, de préférence inférieure à 150°C.

6. Cellule de mesure (1) conforme à l'une des revendications précédentes,
**caractérisée en ce que**
le revêtement antiadhésif (7) est exempt de polymère.

7. Cellule de mesure (1) conforme à l'une des revendications précédentes,
**caractérisée en ce que**
le revêtement antiadhésif (7) a une épaisseur (d) de 10 µm.

8. Cellule de mesure (1) conforme à l'une des revendications précédentes,
**caractérisée en ce que**
le corps de cellule de mesure et/ou la membrane de mesure (5) est (sont) réalisée(s) en céramique.

9. Cellule de mesure (1) conforme à l'une des revendications 3 à 8,
**caractérisée en ce que**
le joint (13) est obtenu au moyen d'une brasure vitreuse et/ou d'une brasure forte.
